# EUROPEAN PATENT APPLICATION

(11) **EP 2 773 057 A1**
(43) Date of publication of application: **03.09.2014**
(21) Application number: 13305224.1
(22) Date of filing: 27.02.2013
(51) Int. Cl.: H04J 14/02

(54) **Optical network node and method of transmitting wavelength multiplexed optical data signals**

(71) Applicant: ALCATEL LUCENT, 92100 Boulogne-Billancourt (FR)
(72) Inventor: Buchali, Fred, 70435 Stuttgart (DE); Klekamp, Axel, 70435 Stuttgart (DE)
(74) Representative: Mildner, Volker

(57) **Abstract**

In order to reduce wavelength fragmentation in an optically switched network, an improved optical signal transmission method and corresponding network node is proposed. A wavelength division multiplexed optical signal, which carries multiple wavelength channels, is transmitted. Through switching of individual wavelengths or wavelength bands within the network, a wavelength gap can exist within said wavelength division multiplexed optical signal. By shifting at least part of the wavelength channels using an optical modulation technique, the wavelength gap is either increased or decreased.

## Description

### Field of the Invention

The present invention relates to the field of telecommunications and more particularly to an optical add drop multiplexer and a method of transmitting wavelength multiplexed optical data signals.

### Background of the Invention

In optical transmission networks, signals are often transported using wavelength division multiplexing (WDM). The wavelength channels in existing WDM system typically have a fixed spectral width in accordance with an equidistant wavelength grid of for example 50 GHz channel spacing.

In order to support a more flexible and more efficient WDM transport, a flexible grid has recently been defined by the ITU-T in G.694.1 (2/2012), which allows wavelength slots with a variable slot width that can be chosen in granularity of 12.5 GHz, i.e. as m × 12.5 GHz, where m is a positive integer. Any combination of frequency slots is allowed as Long as no two frequency slots overlap.

In case such flexible grid signals are used in an optically switched, meshed network rather than only in point-to-point configurations, wavelengths channels must be added to and dropped from signals as they travel through the network. Since, due to the flexible channel width, add and drop channels will not necessarily occupy the same number of 12.5 GHz slots, the channel allocation of a WDM signal may get fragmented and "stranded" spectral slots may be left unused, leading to a less efficient bandwidth allocation. Especially the re-use of lowest bandwidth slots (12.5 GHz) is almost impossible because to add a new channel a minimum bandwidth of typically 50 GHz or at least 37.5 GHz will be required.

The incorporation of optical wavelength conversion in cross-connects would enable a more efficient usage of fibers in the network. However, a mature technology for all-optical wavelength conversion is not available today and the introduction of O/E/O conversion for wavelength conversion is expensive and contradicts the aim of optically switched networking.

### Summary of the Invention

It is therefore an object of the present invention to provide a method and rotated network node, which can reduce wavelength fragmentation in an optically switched network with flexible channel width assignment.

These and other objects that appear below are achieved by applying a broad-band wavelength converter in a ROADM for all-optical defragmentation of meshed networks. The proposed architecture converts a broad band of multiple wavelength slots by a programmed fixed frequency shift of a multiple of slot size to generate suitable slots for adding new channels or to close stranded spectral slots.

More particularly, in an optical signal transmission method using wavelength division multiplexing in a meshed network, a wavelength division multiplexed optical signal which carries multiple wavelength channels is transmitted. Through switching of individual wavelengths or wavelength bands within said meshed network, a wavelength gap can exist within said wavelength division multiplexed optical signal. By shifting at least part of the wavelength channels using an optical modulation technique, the wavelength gap is either increased or decreased.

A corresponding network node has an input port receiving a wavelength division multiplexed optical signal carrying multiple wavelength channels, a demultiplexer capable of configurably demultiplexing the wavelength division multiplexed optical signal, and a wavelength shifter being configurable to shift one or more of the wavelength channels demultiplexed by said demultiplexer using an optical modulation technique.

The possibility of adding a wavelength shift at any stage of the network will lead to a better network usage due to more efficient routing of all-optical paths. Simulations show that the expected increase of capacity through more efficient routing will be in the range of 10 to 20%.

### Brief Description of the Drawings

Preferred embodiments of the present invention will now be described with reference to the accompanying drawings in which
- figure 1: shows an example of a meshed optical network;
- figure 2: shows add, drop , and express signal directions of an optical add drop multiplexer;
- figure 3: shows flexible wavelength slot allocation in optical signals experiencing add and drop operations;
- figure 4: shows the architecture of an optical add drop multiplexer with a broadband wavelength shifter;
- figure 5: shows a block diagram of a wavelength shifter;
- figure 6: shows a wavelength shifter for use with polarization multiplexed optical signals; and
- figure 7: shows the architecture of a 2x2 reconfigurable optical add drop multiplexer.

### Detailed Description of the Invention

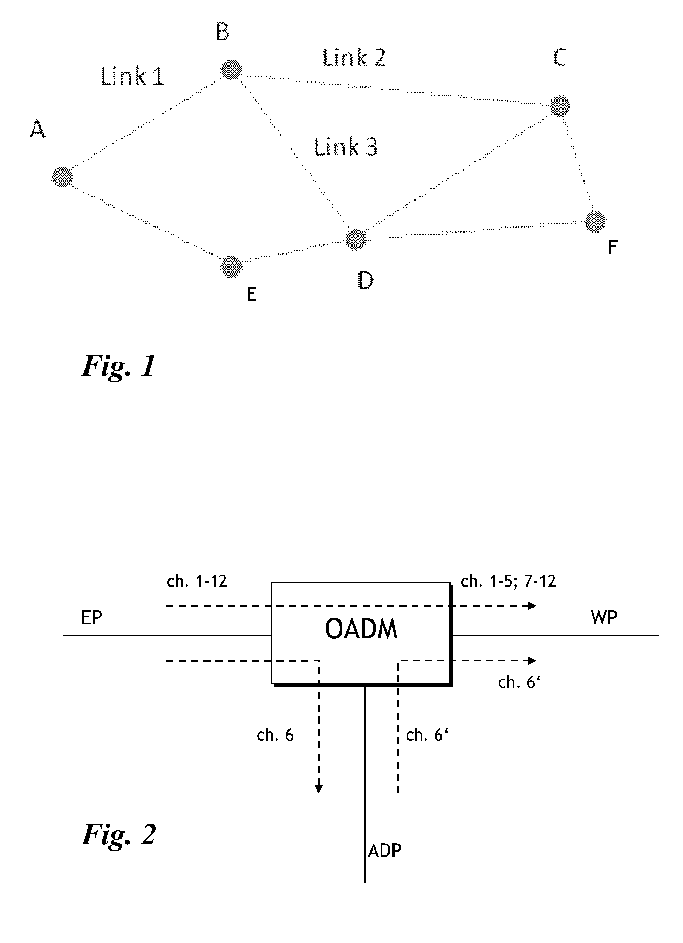

An example for a meshed network is shown schematically in figure 1. It has a number of optical network nodes A-F, being interconnected to form a meshed network. Network nodes A-F transport wavelength multiplexed optical signals using flexibly assigned optical wavelength slots. Client nodes (not shown) can be connected to any network nodes A-F.

Figure 2 serves to show the signal directions of an optical add drop multiplexer OADM. It has network ports EP, WP, which for add drop multiplexers often are referred to as east EP and west WP ports, and an add/drop port ADP for signals to be added and dropped.

Multiplexer OADM receives a WDM signal on its east port EP, which may contain channels 1-12, for instance. OADM drops channel 6, for instance, at the add/drop port ADP, and receives from add/drop port ADP a new signal at wavelength channel 6', which is added to the WDM signal in express direction and transmitted together with express signal channels 1-5 and 7. 12 at west portWP.

Since the WDM signals use a flexible wavelength grid, wavelength channels 6 that is dropped from the WDM signal and wavelength channel 6' that is added to the WDM signal may have different width. On other words, the bandwidth of old channel 6 and new channel 6' may be different.

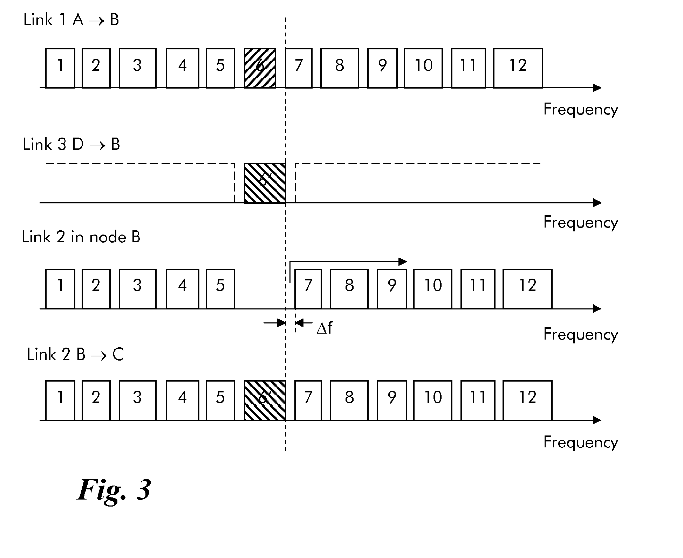

If new channel 6' is of higher bandwidth compared to old 6, the add function can be performed after increasing the bandwidth of the gap left after dropping channel 6. This can be achieved by shifting all channels 7-12 to higher frequencies. The add function can then be performed and the complete band including the new channel 6' can be transmitted. This function is shown in figure 3.

It should be noted that in another approach, the gap after dropping channel 6 may be closed by shifting channels 7-12 towards lower frequencies, if no replacement channel 6' needs to be added. Alternatively, both functions, i.e. increasing of the gap bandwidths to insert a new wider channel or closing of the gap may be performed by shifting channel 1-5 on the left hand side of the spectrum.

In figure 3, which shows signals on input, output and add ports, it is assumed that the node concerned is node B in figure 1. It receives on link 1 a WDM signal with channels 1-12 from node A. Channel 6, which is shown hatched, has to be dropped in node B. On link 3, node B receives a second WDM signal that contains a channel 6', that should be added in node B instead of channel 6 dropped.

The third WDM signal shown is the express signal inside node B. It contains channels 1-5 and 7-12 received from node A and a gap from dropped channel 6. As can be seen, channel 6' is wider than channel 6. Therefore, in order to free a further wavelength slot to add wider channel 6', the entire upper wavelength band including channels 7-12 is shifted in frequency by an amount of Δf towards higher frequencies. Frequency shift Δf can be for instance one increment of 12.5 GHz.

The last WDM signal shown in figure 3 is the signal transmitted on link 2 from node B to node C, which includes channels 1-5 originally coming from node A, channel 6' added from node D and channels 7-12 frequency shifted at node B.

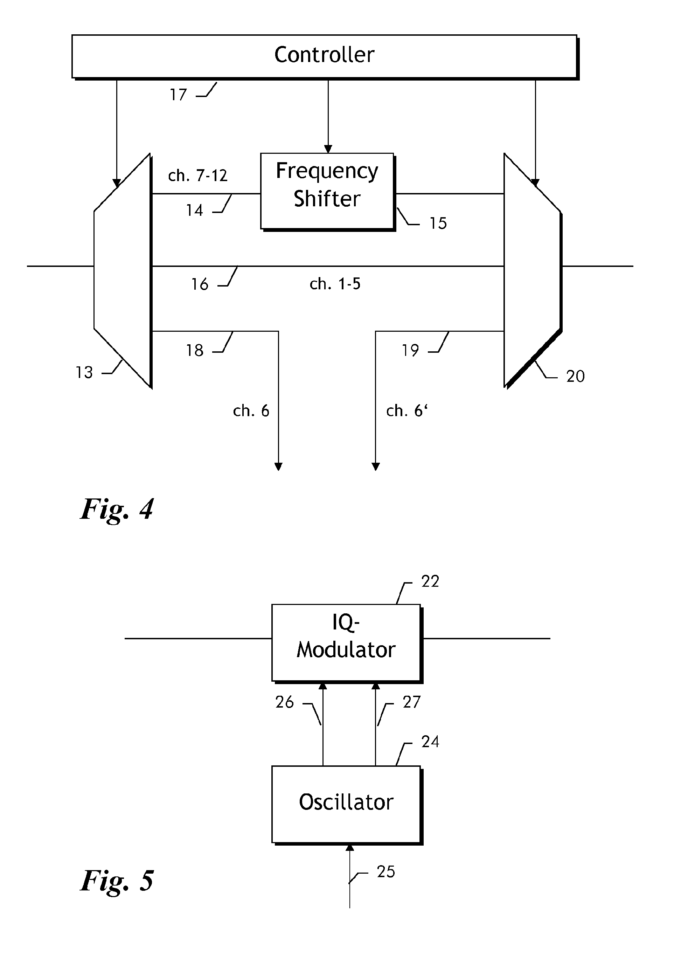

An architecture of an optical add/drop multiplexer is shown in figure 4. It contains a demultiplexer 13, a multiplexer 20, a frequency shifter 15 arranged in a first express path 14 between demultiplexer 10 and multiplexer 20 through frequency shifter 15, a second express path 16 between demultiplexer 10 and multiplexer 20, a drop path 18, and an add path 19. A controller 12 configures demuliplexer 10, wavelength shifter 15, and multiplexer 20.

Demultiplexer 10 and multiplexer 20 can be implemented using conventional, commercially available wavelength selective switches (WSS). Frequency shifter 15 can be implemented using a Mach-Zehnder based IQ-modulator 22 as shown in figure 5 with an extension for dual polarization signals.

In the example of figure 2, demultiplexer 10 receives the WDM signal including channels 1-12. Old channel 6 is dropped on drop path 18. New channel 6' to be added is received on add path 19. Channels 1-5 are fed by demultiplexer 10 via express path 16 to multiplexer 20, while channels 7-12 are fed via express path 14 to frequency shifter 15 and from there to multiplexer 20.

The express path is thus subdivided into an express band, which may also include subbands with gaps in-between, and an express and frequency shifted band, each of which may also include subbands with gaps in-between. The amount of shifted frequency and the direction and the definition of the bands will be configured by controller 17. Controller 17 may be a local controller which is in term controlled by a network management plane, or a controller being part of a distributed control plane of the network which can be implemented based on the GMPLS protocol suite, for instance.

The IQ-modulator 22 shown in figure 5 is a convention Mach-Zehnder based modulator and is as such commercially available. It contains an outer Mach-Zehnder structure, with inner Mach-Zehnder modulators in each branch. Usually such IQ-modulator are used to modulate an optical carrier wavelength in phase and amplitude to create complex modulation formats such as QPSK, 16QAM or higher.

In the subject case, the IQ-modulator 22 is used as frequency shifter. To achieve this, a high frequency electrical modulation signal from an oscillator 24 is fed to the modulator electrodes. In particular the electrode pair of one of the inner Mach-Zehnders is supplied for example with frequency signal 26 having a sine form, while the electrode pair of the other inner Mach-Zehnder is supplied with a plus or minus cosine signal 27 form. In other words, the modulation signals 26, 27 for the two inner Mach-Zehnder structures are mutually shifted by ±π/2. Frequency and direction of phase shift can be configured through a control interface 25. The phase shift can be either between the electrical drive signals 26, 27 of the modulator, but can also be introduced through an appropriate phase delay in one of the modulator branches.

When the broadband optical signal passes through the modulator structure, it experiences a frequency shift corresponding to the modulation frequency, while the direction of the shift depends on the direction in which the modulation signals are shifted with respect to each other. Although this effect as such was described in the article "Integrated Optical SSB Modulator/Frequency Shifter" by M. Izutsu et al, IEEE J. of Quantum Electronics vol. QE-17 no. 11, Nov. 1981, pp2225-2227, which is incorporated by reference herein, it has not been considered for the purpose of wavelength conversion in an optical switch transport network, since.

In telecommunication theory, the modulation can be described as a multiplication of a carrier signal with a modulation signal. For the case of the optical modulator, it does not make a difference in principle whether the optical signal is the carrier signal and the electrical signal the modulation signal or vice versa. Therefore, the wavelength shift can be understood as modulating the optical broadband signal onto an electrical carrier at a frequency of Δf, e.g. of 50 GHz. The frequency shift of the optical broadband signal is thus achieved through a modulation technique, and more particularly, through an optical single sideband modulation technique.

In a general case, a modulation would result in two sidebands occurring at ± Δf. It shows however, that when the phase shift between the electrical drive signal is chosen to equate ±π/2 and the amplitudes of the drive signals at the two branches of the I/Q modulator match, the -Δt sideband is suppressed, resuming in a single sideband modulation. In practice, a small residual amount of the second sideband can be tolerated, thus resulting in a "partial" or imperfect single sideband modulation.

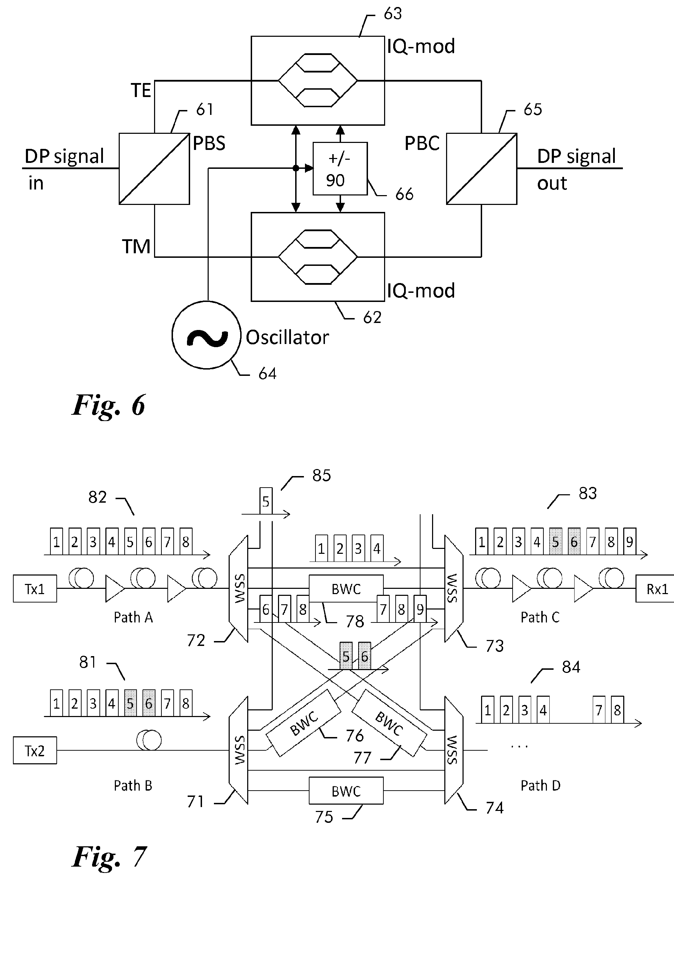

Figure 6 shows a broadband wavelength converter (BWC) for dual-polarization signals using a polarization beam splitter (PBS) 61 prior to a two path broad-band wavelength converter with two IQ-modulators 62, 63 in parallel driven by an oscillator 64 working at the frequency of the desired wavelength conversion. In view of the flexible ITU grid with a wavelength slot granularity of 12.5 GHz, the frequency of oscillator 64 can be configured to a multiple of 12.5 GHz, e.g. 50, 37.5, 25, or 12.5 GHz. A phase shifter provides the ±π/2 for the second modulator branch. The output signals are coupled in a polarization beam combiner (PBC) 65.

Higher oscillator frequencies than 50 GHz would be in principle possible, however, limited bandwidth of available electronic components such as oscillators, driver amplifiers, provide a practical limit to the achievable frequency shift. Therefore larger shifts than 50 GHz should be implemented by cascading frequency shifters to implement a stepwise frequency shift. Considering a network approach, a stepwise frequency shift can even be achieved in subsequent network nodes along an optical path.

A ROADM architecture with a broad-band wavelength converter which can be used for defragmentation is shown in figure 7.

The ROADM architecture proposed in figure 7 contains 4 wavelength-selective switch (WSS) devices 71-74 for implementing a 2×2 node. Express paths connect all demultiplexing WSS 71, 72 with all multiplexing WSS 73, 74. An additional express path incorporating a BWC 74-78 are provided in parallel to each express path. Programmable WSS devices 71-74 enable the definition of frequency bands subject to express, to BWC and to drop with individual bandwidth. Thereby multiple chancel can be transmitted on each path and particularly multiple channels can be wavelength converted simultaneously.

In the embodiment of figure 7, the broadband wavelength conversion concept of the invention is applied in a fixed wavelength grid scenario. WSS 72 receives a wavelength multiplexed signal 82 from transmitter T×1 over path A. WDM signal 82 contains 8 wavelengths in fixed, equidistant wavelength slots. It is assumed that from WDM signal, wavelength channel 5 has to be dropped. The express signal that goes from WSS 72 to output side WSS 73 thus contains wavelengths 1-4 and 6-8.

At WSS 71, a similar WDM signal 81 is received from transmitter Tx2 over path B. WDM signal 81 also contains 8 wavelengths channels and uses the same wavelength grid as signal 82. It is assumed that from signal 81, wavelength channels 5 and 6 shall be redirected to receiver Rx1 connected to output side WSS 73 over path C. Thus, WSS 71 drops channels 5 and 6 (shown grey-shaded) to the internal signal path leading to WSS 73. On the other hand, in the express signal from WSS 72 only wavelength slot 5 is empty due to signal 85 dropped from wavelength channel 5.

Therefore, WSS 72 separates channels 1-4, which go to the express path without frequency shift and wavelengths 6-8, which are fed to the express path including BWC 78. BWC 78 shifts the received wavelength band including channels 6-8 by one channel width, e.g. by 50 GHz, so that these end up in channel slots 7-9. Since now two consecutive channel slots 5 and 6 are available in the express path, WSS 73 can add channels 1-4 and 7-9 coming from WSS 72 and channels 5 and 6 from WSS 71 to form output WDM signal 83 carrying wavelength channels 1-9 for transmission along path C.

As has been shown with the above embodiments, the application of a broad band frequency shifter to a part of the express traffic on one side of the dropped channel to increase the resulting gap after drop or decrease the resulting gap after drop will allow a defragmentation of WDM signals in an optical node without requiring undesired O/E/O conversion. This can be achieved by embedding of frequency shifter between two wavelength selective switches to build an express pass and a frequency shifted path in parallel. Thus, by shifting the wavelength band on one side of a dropped channel can be used to either increase the bandwidth of the gap to a target value, or can fill the gap of the dropped channel.

A WSS can be configured to output bands for express and bands for express plus frequency shift. The amount of frequency shift including its sign can also be configured.

Eventually, the option of adding a frequency shift function will lead to better network usage due to more efficient routing of all-optical paths. According to simulations, the expected increase of capacity through more efficient routing will be in the range of 10 to 20%.

It should also be understood that, although in the above embodiments, the wavelength gap is due to dropping a wavelength channel from a received wavelength-division multiplexed optical signal, the present invention is not limited to this. On the contrary, wavelength gaps can be introduced at any stage in the meshed network and can result from wavelength or waveband switching at the local node or at any previous node in the network. Accordingly, wavelength gaps can be increased or decreased at any subsequent node in the network. For instance, closing a wavelength gap can include decreasing the wavelength gap at consecutive network nodes.

The description and drawings merely illustrate the principles of the invention. It will thus be appreciated that those skilled in the art will be able to devise various arrangements that, although not explicitly described or shown herein, embody the principles of the invention. Furthermore, all examples recited herein are principal intended expressly to be only for pedagogical purposes to aid the reader in understanding the principles of the invention and the concepts contributed by the inventors to furthering the art, and are to be construed as being without limitation to such specifically recited examples and conditions, Moreover, all statements herein reciting principles, aspects, and embodiments of the invention, as well as specific examples thereof, are intended to encompass equivalents thereof.

## Claims

1. An optical signal transmission method using wavelength division multiplexing in a meshed network, comprising transmitting a wavelength division multiplexed optical signal carrying multiple wavelength channels (1-12); wherein through switching of individual wavelengths or wavelength bands within said meshed network, a wavelength gap is created within said wavelength division multiplexed optical signal and shifting at least part of wavelength channels (7-12) to either increase or decrease said wavelength gap using an optical modulation technique.

2. A method according to claim 1, wherein the wavelength channels (7-12) to be shifted are fed to an optical IQ-modulator (22, 62, 63, 75-78), which is driven by a high frequency signal (26, 27), which frequency corresponds to an intended wavelength shift.

3. A method according to claim 1, wherein said wavelength channels (1-5; 7-12) are split into at least one first wavelength band (7-12) to be shifted and at least one second wavelength band (1-5) to be continued unshifted.

4. A method according to claim 3, wherein said at least one first wavelength band (7-12) is shifted and then recombined with said at least one second wavelength band (1-5) to form an output wavelength division multiplexed optical signal.

5. A method according to claim 4, wherein said shifting increases said wavelength gap and wherein one or more wavelength channels (6') to be added are coupled into said output wavelength division multiplexed optical signal thus filing the increased wavelength gap.

6. An optical network node (A-F) for use in a meshed network, comprising an input port receiving a wavelength division multiplexed optical signal carrying multiple wavelength channels (1-12), a demultiplexer (13) capable of configurably demultiplexing said wavelength division multiplexed optical signal and a wavelength shifter (15) being configurable to shift one or more of said wavelength channel (7-12) demultiplexed by said demultiplexer (13) using an optical modulation technique.

7. An optical network node according to claim 6, wherein said wavelength shifter (15) comprises an optical IQ-modulator (22; 62, 63) and a high frequency oscillator (24; 64) driving said optical IQ-modulator (22; 62, 63) with a high frequency signal (26, 27), which frequency corresponds to an intended wavelength shift.

8. An optical network node according to claim 6, wherein said demultiplexer (13) is configurable to split said wavelength division multiplexed optical signal into at least one first wavelength band (7-12) to be shifted and at least one second wavelength band (1-5) to be continued unshifted.

9. An optical network node according to claim 8, comprising a multiplexer (20) being configurable to recombine said at least one first wavelength band after it is shifted (7-12) with said at least one second wavelength band (1-5) to form an output wavelength division multiplexed optical signal.

10. An optical network node according to claim 9, comprising an add port (19) for receiving a one or more wavelength channels (6') to be added, which is in contact with said multiplexer (20) to couple said one or more wavelength channels (6') to be added into said output wavelength division multiplexed optical signal thus filing a wavelength gap, after said gap was increased by said wavelength shifter (15).

11. An optical network node according to claim 6, wherein said demultiplexer (13) is configurable to drop one or more wavelength channels (6) from said wavelength division multiplexed optical signal thus creating a wavelength gap to be increased or decreased by said wavelength shifter (15).

12. An optical network node according to any of claims 6-11, wherein said demultiplexer and/or said multiplexer are implemented using a wavelength-selective switch.

13. An optical network node according to claim 8, wherein said first wavelength band (7-12) and/or said second wavelength band include noncontinuous wavelength subbands.

14. An optical network node according to claim 6 or a method according to claim 1, wherein said wavelength channels (1-12) have variable wavelength slot widths.

15. An optical network node according to claim 6 or a method according to claim 1, wherein said optical modulation technique is a optical single sideband modulation technique.
